# EUROPEAN PATENT SPECIFICATION

(11) **EP 1 786 222 B1**
(45) Date of publication and mention of the grant of the patent: **08.09.2010**
(21) Application number: 06290308.3
(22) Date of filing: 23.02.2006
(51) Int. Cl.: H04W 16/16

(54) **Access network, gateway and management server for a cellular wireless communication system**
Zugangsnetz, Gateway und Verwaltungsserver für ein zellulares Mobilkommunikationssystem
Réseau d'accès, passerelle et serveur de gestion pour un système cellulaire de communication mobile

(30) Priority: 15.11.2005 US 736898 P
(43) Date of publication of application: 16.05.2007
(73) Proprietor: Alcatel Lucent, 75008 Paris (FR)
(72) Inventor: Duplessis, Philippe, 92700 Colombes (FR); Lescuyer, Pierre, 78180 Montigny le Bretonneux (FR)
(74) Representative: Ameline, Jean-Paul B.C.

(56) References cited:
- EP-A- 1 207 708
- GB-A- 2 381 158

## Description

The present invention relates to the deployment of home gateways for cellular radio networks.

It will be described below in its particular application to third generation (3G) cellular networks of the UMTS ("Universal Mobile Telecommunications Service") type However, it will be appreciated that it is applicable to very diverse types of digital cellular systems.

It has been proposed (see e.g. US patent 6,615,035) to provide customers of cellular operators with so-called home base stations (HBS). Such a unit is to be connected to the customer's telephone land line and it presents a radio interface similar to that of the cellular infrastructure. When the customer uses his/her handset at home, namely within range of the HBS, the call is established via the land line and the public switched telephone network (PSTN) instead of the cellular network. Mobility functions between the coverage of the HBS and the cells of the cellular infrastructure are not offered.

The deployment of home base stations poses a number of problems, in particular for radio engineering and access control. The HBS have not been designed for extending the coverage of the cellular infrastructure, but rather as a convenience for the customer to use his/her handset at home while paying the communications at the PSTN tariff.

Although the concept of HBS has not been very successful so far, it has the potential of providing indoor coverage, which is always a challenge for the cellular operator. This advantage also exists with the concept of "home gateway". A home gateway (HGW) also provides a radio interface similar to that of the cellular infrastructure, but it interfaces with the broadband data network rather than with the PSTN. The coverage of the HGW can be considered as a cell of the network, to which it is fully integrated.

In most modern cellular networks, the cell sites are controlled by equipment referred to as base station controller or radio network controller (RNC). The RNC provides many radio resource control (RRC) functions for the cells and mobile stations under its supervision. For this reason, the HGWs proposed so far generally include RNC functionality in addition to base station functionality. This architecture has a number of shortcomings. There are many problems associated with interfacing customer premises equipment with the core network of the cellular operator, in particular because the switching nodes of the core network are not well suited for interfacing with a large number of RNCs. Moreover, for the concept of HGW to be promising, the cost of the gateway must be kept as low as possible, and the presence of RNC functionality is not favorable to that goal.

Another example can be found in document EP 1 207 708 (ERICSSON) 22 May 2002 (2002-05-22).

An object of the present invention is to propose another architecture which makes it possible to minimize the complexity of the HGW and provides for its association with an RNC of the access network.

The invention thus proposes an access network for a cellular wireless communication system, comprising home gateways placed in customer premises and a private operator network. Each home gateway has an interface for communication over a broadband public network and a base transceiver station for providing wireless links to at least one mobile station and interfacing with a base station control unit. The private operator network comprises base station control units, at least one security gateway and at least one home gateway management server. The security gateway has a secure interface for establishing secure tunnels for communication with home gateways through the broadband public network. Each home gateway is arranged for communicating via the security gateway with a home gateway management server of the private operator network to obtain an address of one of the base station control units allocated to this home gateway. The base transceiver station of a home gateway interfaces with the base station control unit allocated to this home gateway via the private operator network and a secure tunnel with the security gateway.

The HGW forms a cellular access point to be installed in the customer's home, thus offering a solution to indoor coverage. Any terminal compatible with the cellular wireless communication system can be used to communicate through the HGW. The RNC functions are implemented in a remote base station control unit, so that the complexity and cost of the HGW can be kept as low as possible so as to be compatible with the consumer market.

The architecture of the access network makes it possible to safely carry the BTS(HGW)/RNC interface over a broadband public network such as the Internet. Another of its advantages is that there is no impact on the cellular operator's core network.

The provisioning operations needed at the HGW ievei are also minimized. The HGW as delivered to a customer must simply call a security gateway and then a home gateway management server in order to recover its configuration parameters as well as the identification of its allocated base station control unit (RNC). In an advantageous embodiment, a memory module is provided in the home gateway and contains an address of a home gateway management server for recovering the configuration parameters and the address of the allocated base station control unit.

The home gateway management server preferably has an allocation module for dynamically allocating respective base station control units to at least some of the home gateways. The base station control unit allocated to at least one home gateway can be selected on the basis of a load balancing criterion between the base station control units of the private operator network, so as to minimize the risk of congestion.

Alternatively, the allocation module can select for a home gateway having a defined location a base station control unit having connectivity with another base station control unit of the cellular network, said other base station control unit supervising at least one cell covering said location. Provided that the location of the HGW in operation is known, this enables mobility of the customer's terminal during a communication from the coverage of the HGW to that of a regular BTS of the cellular network.

Another aspect of the present invention relates to a home gateway for an access network of a cellular wireless communication system, wherein the access network comprises a private operator network having base station control units, at least one security gateway and at least one home gateway management server. The home gateway has an interface for communication over a broadband public network, a base transceiver station for providing wireless links to at least one mobile station and interfacing with a base station control unit of the private operator network, and means for communicating via the security gateway with a home gateway management server of the private operator network to obtain an address of one of the base station control units allocated to said home gateway so that the base transceiver station interfaces with the base station control unit allocated to said home gateway via the private operator network and a secure tunnel established over the broadband public network between the security gateway and said home gateway.

Yet another aspect of the present invention relates to a home gateway management server for an access network of a cellular wireless communication system, wherein the access network comprises home gateways placed in customer premises and a private operator network including said home gateway management server, base station control units and at least one security gateway, each home gateway having an interface for communication with a security gateway over a broadband public network and a base transceiver station for providing wireless links to at least one mobile station and interfacing with a base station control unit. The home gateway management server has means for sending to at least one of the home gateways, via the security gateway, a respective address of one of the base station control units allocated to said home gateway.

Other features and advantages of the invention will become apparent from the following description of non-limiting exemplary embodiments, with reference to the appended drawings, in which:
- figure 1 is a block diagram of a cellular wireless communication system incorporating an embodiment of the invention;
- figure 2 is a block diagram of customer equipment including a home gateway in accordance with the invention;
- figure 3 is a diagram illustrating different phases of the configuration of a home gateway in accordance with the invention; and
- figure 4 is a block diagram of an exemplary embodiment of a home gateway management server in accordance with the invention.

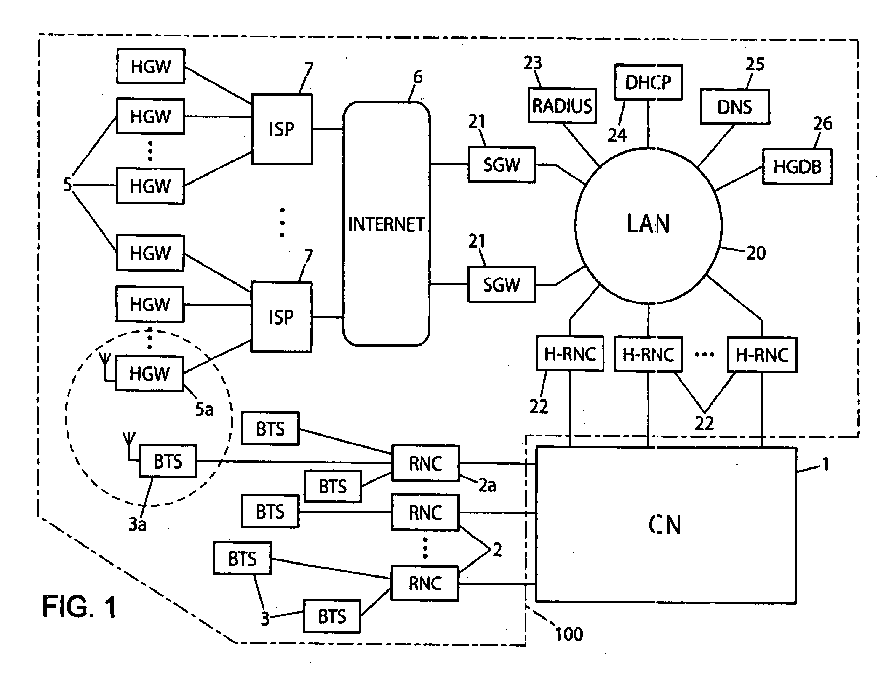

Referring to figure 1, a conventional UMTS system includes a core network (CN) 1 comprising interconnected switches referred to as MSC for circuit-switched services an as SGSN for packet-switched services. In the UMTS terrestrial radio access network (UTRAN) architecture, a number of radio network controllers (RNCs) 2 are connected to the CN switches. Each RNC 2 supervises a number of base transceiver stations (BTSs) 3, or "nodes B" through an interface referred to as lub in the UMTS standards. The BTSs are distributed over the territory to be covered by the access network. Each BTS serves one or several cells where the cellular service is made available to the public.

According to the invention, home gateways (HGWs) 5 are added to the access network to define cells of a different kind. A HGW 5 uses the same radio interface as a regular BTS 3. For convenience, the set of HGWs 5 can be allocated a specific carrier frequency distinct from that or those used by the BTSs 3, so as to avoid complications in the radio engineering of the public part of the access network due to interference with HGWs. The radio range of a HGW is low, typically a few tens of meters. It is intended to be installed in customer premises, so that it is an efficient means for the cellular operator to offer indoor coverage.

A HGW 5 uses the customer's digital subscriber line (DSL) for broadband access to the Internet 6, for example an asymmetric digital subscriber line (ADSL). The customer's DSL connects the HGW 5 to a router 7 of his Internet service provider (ISP).

A private operator network organized as a local area network (LAN) 20 is provided for the integration HGWs 5 to the cellular access network. The units of the private operator network 20 include:
- security gateways (SGW) 21 connected to the Internet 6 and capable of establishing secure tunnels with the HGWs through the Internet 7;
- a plurality of RNCs 22, designated here as H-RNC, each connected to the core network 1;
- an authentication server 23, typically using the RADIUS protocol;
- a DHCP server 24 for providing the HGWs with IP addresses in accordance with the standard dynamic host configuration protocol (DHCP);
- a domain name server (DNS) 25; and
- a home gateway management server 26, or home gateway database (HGDB).

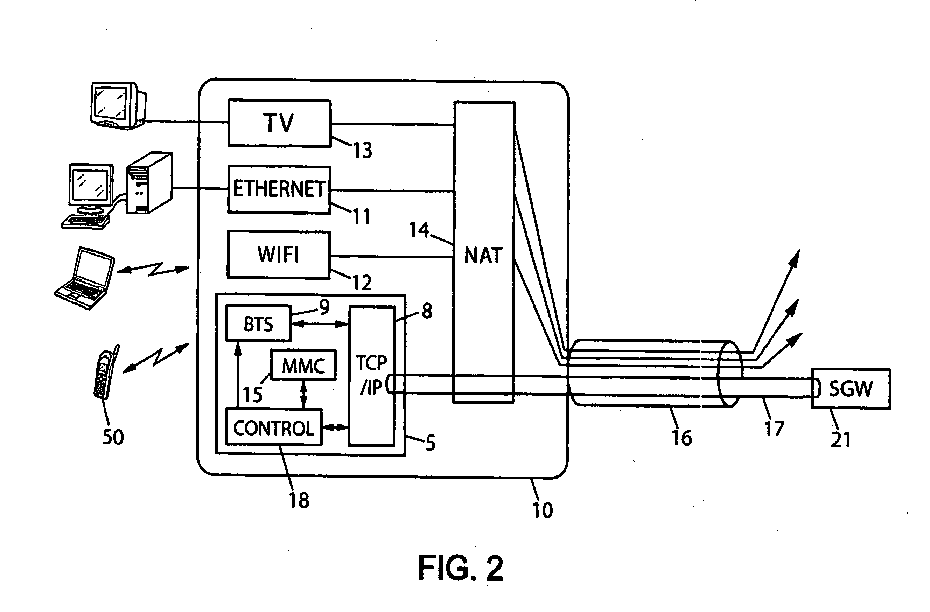

In an exemplary embodiment (figure 2), the HGW 5 belongs to a set top box 10, either as a built-in unit or as a peripheral unit, along with other modules such as an Ethernet board 11, a Wifi board 12, a TV decoder 13, etc. A network address translator (NAT) module 14 is provided within the set top box 10 for interfacing with the Internet via the subscriber's access line 16 and separating the public addressing domain from the private addressing domain of the customer.

The HGW 5 has a network (TCP/IP) interface 8 and a BTS unit 9 suitable for performing the node B functions of the UMTS standard. The HGW 5 is also fitted with a memory microcard (MMC) module 15 in which certain parameters are stored, including:
- a HGW identifier (ID) accessible for reading only, which may be coded in the same manner as the international mobile subscriber identity (IMSI);
- the IP address of a main SGW 21 to be contacted by the HGW. A backup SGW IP address may also be provided in case the main SGW would not be available;
- the IP address of a HGDB 26 to be contacted by the HGW; and
- security credentials for the HGW, stored internally of the MMC without any possible access from the outside.

A control module 18 of the HGW 5 supervises the operation of the BTS unit 9 and exchanges information with the MMC module 15 and the private operator network 20 as described further on.

Before the HGW 5 is delivered to the customer, some pre-configuration is needed to create the HGW ID and the associated security credentials, to record them into the RADIUS server 23, and to load the above-listed parameters into the MMC module 15. In addition, any customer-specific parameters needed for the operation of the HGW ID is defined and stored in the HGDB 26.

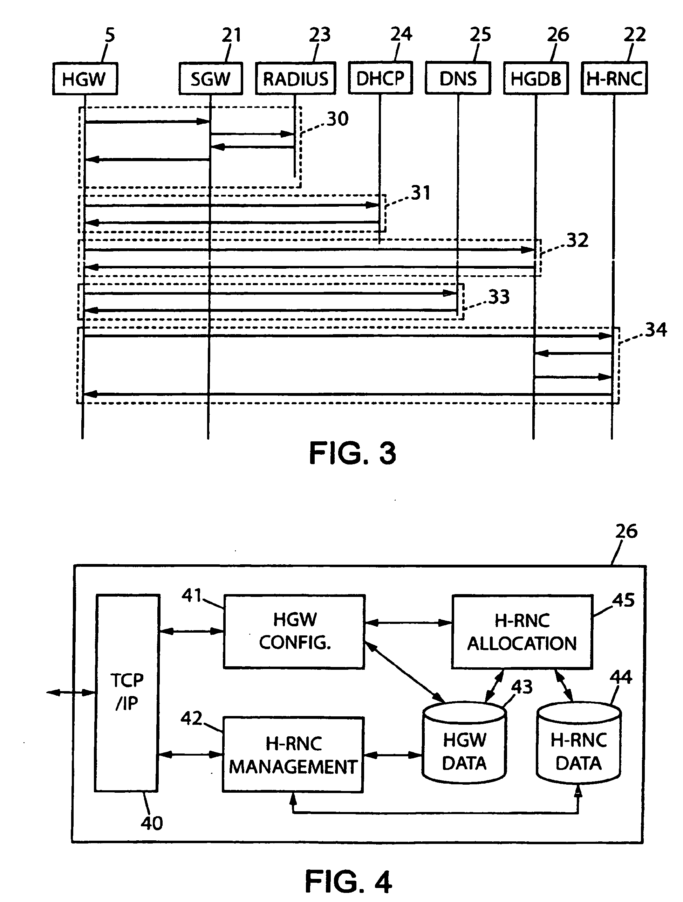

The HGW 5 is designed to be plug-and-play. When the customer piugs in and activates his HGW, its control module 18 automatically contacts the SGW 21 at the IP address written in the MMC module 15. This initiates the Internet access phase 30 indicated in figure 3. In connection with the RADIUS server 23, the SGW proceeds with the authentication of the HGW and the establishment of an IPsec tunnel 17 with the HGW. This secure tunnel 17 will be used to encapsulate the UMTS lub interface between the BTS unit 9 of the HGW and a H-RNC 22 over the Internet 6. The use of a secure tunnel prevents unauthorized HGWs from getting service from the CN 1 and avoids various potential security threats.

The next phase 31 of the configuration is the assignment of an IP address to the HGW by means of a request sent by the control module 18 of the HGW to the DHCP server 24. Then, in phase 32, the control module 18 of the HGW 5 contacts the HGDB 26 whose address is stored in the MMC module15, and retrieves from this HGDB all the customer-specific parameters including the domain name of a H-RNC 22 allocated to this HGW. In phase 33, the IP address of the H-RNC is resolved by an exchange between the control module 18 of the HGW and the DNS 25. The HGW 5 can then proceed with the attachment 34 of its BTS unit 9 with the allocated H-RNC 22.

In the attachment phase 34, the HGW sends an attachment request to its H-RNC 22. The H-RNC retrieves from the HGDB 26 all the parameters provisioned for this HGW and confirms the attachment to the HGW. The BTS unit 9 is then capable of supporting communications for one or more terminals (UE, "user equipment") located within its range.

The attachment phase 34 is repeated each time the HGW 5 is switched on. The parameters which are returned by the HGDB 26 upon the H-RNC's request include the identity of the H-RNC 22 currently allocated to the HGW. It can happen that the allocation changes over time, and in this case, the H-RNC contacted by the control module 18 and receiving the ID of another H-RNC from the HGDB notes the inconsistency and returns to the HGW a message to cause the HGW to resume its configuration procedure from the start. This will establish the new link between the HGW and its new serving H-RNC. The previous H-RNC then removes the HGW from its list of supervised BTSs.

Optionally, certain post-configuration steps can be executed once the actual owner of the HGW is known, in order to add information to the previously stored customer-specific parameters, such as the geographical coordinates of the installed HGW, for emergency services, or some mobility information usable in certain advantageous embodiments described further on.

Figure 4 illustrates a possible structure of a HGBD 26 having a TCP/IP interface 40 with the LAN 20, a HGW configuration module 41 for exchanging information with the control modules 18 of the HGWs 5 as indicated above, and a H-RNC management module 42. The HGBD 26 has two databases 43, 44, one for storing the HGW data and one for storing the H-RNC data.

The HGW database 43 contains the customer-specific data created when programming the MMC modules 15 as well as the identification of the H-RNCs 22 respectively allocated to the HGWs 5.

The H-RNC database 44 contains OMC information on the pool of H-RNCs 22 of the private LAN 20. In particular, it can contain, for each H-RNC 22:
- an indication of the load of the H-RNC, in terms of number of HGWs 5 to which it is allocated;
- connectivity information identifying the RNCs 2 of the public part of the cellular network with which the switches of the core network 1 can provide connectivity.

The H-RNC management module 42 is in charge of updating the contents of the H-RNC database 44. It also communicates with the H-RNC 22 in the above-described attachment phase 34.

The HGBD 26 further has an allocation module 45 which can apply different strategies or algorithms to allocate H-RNCs 22 to the HGWs 5.

In an advantageous embodiment, an RNC pooling approach is used, in which the allocation module 45 assigns the least loaded RNC (based upon the information of the H-RNC database 44) each time a HGW 5 runs the setup process, i.e. is switched on.

Such an approach makes use of a load balancing criterion among the H-RNCs 22 of the private LAN 20 to select the base station control unit selected for a HGW. It will be appreciated that the load to be balanced could be measured differently. For example, instead of being measured only in terms of numbers of attached HGWs, it can take into account a weighting derived from the average amount of communications established through a particular H-RNC, which depends on the customer's activity, or the mean throughput of such communications. If such a possibility is used, the parameters to determine the weightings must be provided by the H-RNCs 22 to management module 42 for storage in the H-RNC database 44.

When a mobility option is offered to certain users, the location of their HGWs 5 is taken into account by the allocation module 45, along with the connectivity information stored in the H-RNC database 44.

For example, in figure 1, the dashed circle indicates that the HGW 5a is under the radio coverage of an umbrella cell served by a BTS 3a of the public part of the cellular network. If the owner of the HGW 5a has subscribed a mobility option, he/she has to indicate the location where the HGW is installed. The location information, an identifier of the BTS 3a of the umbrella cell and an identifier of the RNC 2a supervising that BTS 3a are stored in the HGW database 43 as part of the record provided for the HGW 5a. In phase 32, when the HGDB 26 is contacted by the HGW 5a, the allocation module 45 notes from the database 43 that the mobility option is active for that HGW and recovers the identifier of the RNC 2a. By looking up the H-RNC database 44, it then selects a H-RNC 22 for which there is connectivity via the CN 1 and the selected H-RNC is indicated in the response to the HGW 5a.

In addition, upon receipt of the H-RNC's request in the attachment phase 34, the H-RNC management module 42 retrieves the identifier of the BTS 3a of the umbrella cell from the HGW database 43 (or the group of such identifiers if the HGW is within more than one cell), and this(ese) identifier(s) is(are) returned to the H-RNC as part of the HGW configuration parameters. The H-RNC 22 then signals to the HGW 5a which BTS is to be monitored by a UE having a communication through the HGW 5a for a possible handover of the communication. The corresponding information is included by the HGW 5a into the system information broadcast on a common signaling channel, or transmitted to the UE on a dedicated channel.

In the embodiment presented above, where the HGWs use a specific carrier frequency, the HGW 5a generally does not indicate any neighbor cells for intra-frequency measurements, because handovers from a HGW to another HGW are generally not allowed. The monitoring by the UE of the neighbor cell(s) (BTS 3a) is done in the so-called compressed mode, in which transmission gaps are provided to let the UE perform inter-frequency measurements while the communication proceeds. The measurements made by the UE on the signal received from the serving HGW 5a and on the signals received in compressed mode from the neighboring BTS 3a are reported to the serving H-RNC 22 as part of the radio resource control (RRC) procedures. The handover criteria checked by the H-RNC are based on such measurements, possibly completed by measurements made by the HGW 5a, to decide whether a handover is needed depending on the radio conditions observed in the communication. When the inter-frequency handover is decided, the corresponding signaling is sent to the new BTS 3a (owing to the connectivity ensured by the CN 1) and to the UE via the old BTS 9 within the HGW 5a.

The module 45 can use different allocation algorithms in parallel for different HGWs, in particular if the above mobility option applies to only some of the HGWs. For example, the H-RNC pooling approach can be applied to the HGWs without the mobility option.

The H-RNCs 22 are functionally similar to the RNCs 2 of the public part of the cellular network. The following differences can be noted:
- there is no node B provisioned a priori. The HGW are dynamically attached, using the mechanisms described above;
- the H-RNC interface with its controlled BTSs 9 is based on the IP protocol as indicated above;
- a new mechanism may be implemented, for the H-RNC 22 to provide the HGDB 26, upon request, with the number of attached HGWs and/or the above-mentioned weighting parameters. This is required if the HGDB 26 is to balance the load between H-RNCs;
- the call processing task can be modified to incorporate IMSI checking against an access grant list (AGL).

Moreover, the dimensioning of a H-RNC 22 will generally be different from that of a RNC 2. A conventional RNC 2 is typically designed to manage from 1,000 to 2,000 BTSs 3 or cells each having a relatively high traffic capacity (e.g. about 4 Erlang). In contrast, a H-RNC may have to manage up to 50,000 or 100,000 HGWs 5 of lower traffic capacity (e.g. about 0.1 Erlang).

An access grant list (AGL) is useful in the situation where not every UE is allowed to communicate through a HGW 5. As the HGW 5 is using the private DSL access of its owner, it is useful to optionally provide a service to restrict the access to users which are explicitly allowed by the HGW owner. The AGL contains a list of the IMSI of users authorized to communicate through a given HGW (for example up to sixteen IMSIs). It is permanently stored at the HGW database 43 and downloaded to the allocated H-RNC during the attachment phase 34.

It is possible to define in the HGDB, for each HGW 5, the restriction policy which applies. Table I below shows the features of three possible policies, namely shows if there is a restriction based on an AGL.

The OPEN policy is intended to apply to relatively isolated places, i.e. where there is little or no interference from neighbors, if the owner does not want to actually manage the access to his HGW. The HGW 5 can then be regarded as an extension of the outdoor coverage of the network.

The PRIVATE policy is also intended for isolated places, but in cases where the owner wants to exert some control on the access. However, in that case, any "non-allowed" user may roam on that HGW and receive calls, although it is not able to originate calls, except calls identified with the emergency cause

The CLOSED policy applies to owners who want to have the full control of who is using the HGW 5, and may be used in areas populated with HGWs in close neighborhood, such as in urban areas. Rejection of location area (LA) update (*) is achieved with the "forbidden LA" cause to resolve the near-far issue when a user is closer from his neighbor's HGW than from his own. HGWs using this policy cannot be considered as extensions of the outdoor coverage, except for their owner and the users registered in the AGL.

**Table I**

| Policy: | OPEN | PRIVATE | CLOSED |
|---|---|---|---|
| Restrictions on Mobile Originated calls (standard)? | No | Yes | Yes |
| Restrictions on Mobile Originated calls (emergency)? | No | No | No |
| Restrictions on Location Area update? | No | No | Yes (*) |
| Restrictions on Mobile Terminated calls? | No | No | Yes |

When a connection request for a given IMSI is received at the H-RNC 22 allocated to a HGW to which the PRIVATE or CLOSED policy applies, the H-RNC checks the type of call and if necessary whether the IMSI belongs to the AGL pertaining to the HGW in order to decide whether the connection setup can be continued.

The invention has been described above in the particular case of a UMTS network for the sake of illustration. It will be appreciated that it is applicable to various kinds of cellular network. It is also possible to provide HGWs 5 and the private operator LAN 20 only for certain services offered to the subscribers, for example only for the packet-switched (PS) domain, the circuit-switched (CS) domain services being delivered through the public part of the network.

## Claims

1. An access network for a cellular wireless communication system, comprising home gateways (5) placed in customer premises and a private operator network (20),
wherein each home gateway has an interface (8) for communication over a broadband public network (6) and a base transceiver station (9) for providing wireless links to at least one mobile station and interfacing with a base station control unit,
wherein said private operator network comprises base station control units (22), at least one security gateway (21) and at least one home gateway management server (26), the security gateway having a secure interface for establishing secure tunnels (17) for communication with home gateways through the broadband public network,
wherein each home gateway is arranged for communicating via the security gateway with a home gateway management server of the private operator network to obtain an address of one of the base station control units allocated to said home gateway,
and wherein the base transceiver station of a home gateway interfaces with the base station control unit allocated to said home gateway via the private operator network and a secure tunnel with the security gateway.

2. The access network as claimed in claim 1, wherein the home gateway management server (26) has an allocation module (45) for dynamically allocating respective base station control units (22) to at least some of the home gateways (5).

3. The access network as claimed in claim 2, wherein the allocation module (45) is arranged for allocating to at least one home gateway (5) a base station control unit (22) selected on the basis of a load balancing criterion between the base station control units of the private operator network (20).

4. The access network as claimed in claim 2, wherein the allocation module (45) is arranged for allocating to a home gateway (5a) having a defined location a base station control unit (22) having connectivity with another base station control unit (2a) of the cellular network, said other base station control unit supervising at least one cell covering said location.

5. The access network as claimed in claim 4, wherein the base station control unit (22) allocated to said home gateway (5a) having a defined location is arranged to cause a communication established through the base transceiver station (9) of the home gateway to be handed over to a cell supervised by said other base station control unit (2a) depending on radio conditions of said communication.

6. The access network as claimed in any one of the preceding claims, wherein the home gateway (5) has a memory module (15) containing an address of a home gateway management server (26) for recovering configuration parameters and the address of the allocated base station control unit (22).

7. The access network as claimed in claim 6, wherein the memory module (15) further contains an address of a security gateway (21) of the private operator network (20).

8. The access network as claimed in any one of the preceding claims, wherein at least one of the home gateways (5) is associated with an access grant list stored at the home gateway management server (26), the access grant list designating mobile stations authorized to communicate through said one of the home gateways.

9. The access network as claimed in claim 8, wherein the access grant list is downloaded from the home gateway management server (26) to the base station control unit (22) allocated to said one of the home gateways (5) in a phase (34) of attachment of said one of the home gateways to said base station control unit.

10. A home gateway for an access network of a cellular wireless communication system, wherein the access network comprises a private operator network (20) having base station control units (22), at least one security gateway (21) and at least one home gateway management server (26), wherein the home gateway (5) comprises an interface (8) for communication over a broadband public network (6), a base transceiver station (9) for providing wireless links to at least one mobile station and interfacing with a base station control unit of the private operator network, and means (18) for communicating via the security gateway with a home gateway management server of the private operator network to obtain an address of one of the base station control units allocated to said home gateway so that the base transceiver station interfaces with the base station control unit allocated to said home gateway via the private operator network and a secure tunnel established over the broadband public network between the security gateway and said home gateway.

11. The home gateway as claimed in claim 10, further comprising a memory module (15) containing an address of a home gateway management server (26) for recovering configuration parameters and the address of the allocated base station control unit (22).

12. The home gateway as claimed in claim 11, wherein the memory module (15) further contains an address of a security gateway (21) of the private operator network (20).

13. A home gateway management server for an access network of a cellular wireless communication system, wherein the access network comprises home gateways (5) placed in customer premises and a private operator network (20) including said home gateway management server (26), base station control units (22) and at least one security gateway (21), wherein each home gateway has an interface (8) for communication with a security gateway (21) over a broadband public network (6) and a base transceiver station (9) for providing wireless links to at least one mobile station and interfacing with a base station control unit, wherein the home gateway management server (26) has means (41) for sending to at least one of the home gateways, via the security gateway, a respective address of one of the base station control units allocated to said home gateway.

14. The home gateway management server as claimed in claim 13, further comprising an allocation module (45) for dynamically allocating respective base station control units (22) to at least some of the home gateways (5).

15. The home gateway management server as claimed in claim 14, wherein the allocation module (45) is arranged for allocating to at least one home gateway (5) a base station control unit (22) selected on the basis of a load balancing criterion between the base station control units of the private operator network (20).

16. The home gateway management server as claimed in claim 14, wherein the allocation module (45) is arranged for allocating to a home gateway (5a) having a defined location a base station control unit (22) having connectivity with another base station control unit (2a) of the cellular network, said other base station control unit supervising at least one cell covering said location.

17. The home gateway management server as claimed in any one of claims 13 to 16, further comprising means (43) for storing at least one access grant list associated with a respective one of the home gateways (5), the access grant list designating mobile stations authorized to communicate through said one of the home gateways.

18. The home gateway management server as claimed in claim 17, further comprising means (42) for downloading said access grant list to the base station control unit (22) allocated to said one of the home gateways (5) in a phase (34) of attachment of said one of the home gateways to said base station control unit.

## Patentansprüche

1. Ein Zugangsnetzwerk für ein zellulares drahtloses Kommunikationssystem, umfassend am Kundenstandort installierte Heim-Gateways (5) und ein privates Betreibernetzwerk (20),
wobei jedes Heim-Gateway eine Schnittstelle (8) zur Kommunikation über ein öffentliches Breitbandnetz (6) und eine Basis-Transceiver-Station (9) für die Bereitstellung von drahtlosen Verbindungen an zumindest eine Mobilstation und den Anschluss an eine Basisstationssteuereinheit umfasst,
wobei das besagte private Betreibernetzwerk Basisstationssteuereinheiten (22), mindestens ein Sicherheits-Gateway (21) und mindestens einen Heim-Gateway-Verwaltungsserver (26) umfasst, wobei die Sicherheits-Gateway eine gesicherte Schnittstelle für den Aufbau von gesicherten Tunneln (17) für die Kommunikation mit Heim-Gateways über das öffentliche Breitbandnetz aufweist,
wobei jedes Heim-Gateway für die Kommunikation über das Sicherheits-Gateway mit einem Heim-Gateway-Verwaltungsserver des privaten Betreibernetzwerks ausgelegt ist, um eine Adresse einer der dem besagten Heim-Gateway zugewiesenen Basisstationssteuereinheiten zu erhalten.
und wobei die Basis-Transceiver-Station eines Heim-Gateways über das private Betreibernetzwerk und einen gesicherten Tunnel mit dem Sicherheits-Gateway mit der dem besagten Heim-Gateway zugewiesenen Basisstationssteuereinheit verbunden ist.

2. Das Zugangsnetzwerk nach Anspruch 1, wobei der Heim-Gateway-Verwaltungsserver (26) ein Zuweisungsmodul (45) für das dynamische Zuweisen von entsprechenden Basisstationssteuereinheiten (22) an zumindest einige der Heim-Gateways (5) aufweist.

3. Das Zugangsnetzwerk nach Anspruch 2, wobei das Zuweisungsmodul (45) dazu ausgelegt ist, mindestens einem Heim-Gateway (5) eine auf der Basis eines Lastverteilungskriteriums zwischen den Basisstationssteuereinheiten des privaten Betreibernetzwerks (20) ausgewählte Basisstationssteuereinheit (22) zuzuweisen.

4. Das Zugangsnetzwerk nach Anspruch 2, wobei das Zuweisungsmodul (45) dazu ausgelegt ist, einem Heim-Gateway (5a) mit einem definierten Standort eine Basisstationssteuereinheit (22) mit Anschlussfähigkeit an eine andere Basisstationssteuereinheit (2a) des zellularen Netzwerks zuzuweisen, wobei die besagte andere Basisstationssteuereinheit mindestens eine diesen Standort abdeckende Zelle überwacht.

5. Das Zugangsnetzwerk nach Anspruch 4, wobei die dem besagten Heim-Gateway (5a) mit einem definierten Standort zugewiesene Basisstationssteuereinheit (22) dazu ausgelegt ist, zu bewirken, dass eine über die Basis-Transceiver-Station (9) des Home-Gateways aufgebaute Verbindung entsprechend den Funkbedingungen der besagten Verbindung an eine von der besagten anderen Basisstationssteuereinheit (2a) überwachte Zelle übergeben wird.

6. Das Zugangsnetzwerk nach einem beliebigen der vorstehenden Ansprüche, wobei das Heim-Gateway (5) ein Speichermodul (15) aufweist, welches eine Adresse eines Heim-Gateway-Verwaltungsservers (26) enthält, um Konfigurationsparameter und die Adresse der zugewiesenen Basisstationssteuereinheit (22) zu erhalten.

7. Das Zugangsnetzwerk nach Anspruch 6, wobei das Speichermodul (15) weiterhin eine Adresse einer Sicherheits-Gateway (21) des privaten Betreibernetzwerks (20) enthält.

8. Das Zugangsnetzwerk nach einem beliebigen der vorstehenden Ansprüche, wobei mindestens eines der Home-Gateways (5) mit einer an dem Heim-Gateway-Verwaltungsserver (26) gespeicherten Zugriffsbestätigungsliste assoziiert ist, wobei die Zugriffsbestätigungsliste für die Kommunikation über das besagte eine der Home-Gateways autorisierte Mobilstationen bestimmt.

9. Das Zugangsnetzwerk nach Anspruch 8, wobei die Zugriffsbestätigungsliste von dem Heim-Gateway-Verwaltungsserver (26) auf die dem besagten einen der Heim-Gateways (5) zugewiesene Basisstationssteuereinheit (22) in einer Phase (34) des Anschlusses des besagten einen der Heim-Gateways an die besagte Basisstationssteuereinheit heruntergeladen wird.

10. Ein Heim-Gateway für ein Zugangsnetzwerk eines zellularen drahtlosen Kommunikationssystems, wobei das Zugangsnetzwerk ein privates Betreibernetzwerk (20) mit Basisstationseinheiten (22), mindestens einem Sicherheits-Gateway (21) und mindestens einem Heim-Gateway-Verwaltungsserver (26) umfasst, wobei das Heim-Gateway (5) eine Schnittstelle (8) für die Kommunikation über ein öffentliches Breitbandnetz (6), eine Basis-Transceiver-Station (9) für die Bereitstellung von drahtlosen Verbindungen an zumindest eine Mobilstation und den Anschluss an eine Basisstationssteuereinheit des privaten Betreibernetzwerks sowie Mittel (18) für die Kommunikation über das Sicherheits-Gateway mit einem Heim-Gateway-Verwaltungsserver des privaten Betreibernetzwerks, um eine Adresse einer der Basisstationssteuereinheiten, welche dem besagten Heim-Gateway zugewiesen ist, zu erhalten, so dass die Basis-Transceiver-Station mit der dem besagten Heim-Gateway zugewiesenen Basisstationssteuereinheit über das private Betreibernetzwerk und einen über das öffentliche Breitbandnetz zwischen dem Sicherheits-Gateway und dem besagten Heim-Gateway aufgebauten Tunnel verbunden ist, umfasst.

11. Das Heim-Gateway nach Anspruch 10, weiterhin umfassend ein Speichermodul (15), welches eine Adresse eines Heim-Gateway-Verwaltungsservers (26) zum Erhalten von Konfigurationsparametern und der Adresse der zugewiesenen Basisstationssteuereinheit (22) enthält.

12. Das Heim-Gateway nach Anspruch 11, wobei das Speichermodul (15) weiterhin eine Adresse eines Sicherheits-Gateways (21) des privaten Betreibernetzwerks (20) enthält.

13. Ein Heim-Gateway-Verwaltungsserver für ein Zugangsnetzwerk eines zellularen drahtlosen Kommunikationssystems, wobei das Zugangsnetzwerk an einem Kundenstandort installierte Heim-Gateways (5) und ein privates Betreibernetzwerk (20, welches den besagten Heim-Gateway-Verwaltungsserver (26), Bassisstationssteuereinheiten (22) und mindestens ein Sicherheits-Gateway (21) einschließt, umfasst, wobei jedes Heim-Gateway eine Schnittstelle (8) für die Kommunikation mit einem Sicherheits-Gateway (21) über ein öffentliches Breitbandnetz (6) und eine Basis-Transceiver-Station (9) für die Bereitstellung von drahtlosen Verbindungen an zumindest eine Mobilstation und den Anschluss an eine Basisstationssteuereinheit umfasst, wobei der Heim-Gateway-Verwaltungsserver (26) Mittel (41) zum Senden einer entsprechenden Adresse einer der Basisstationssteuereinheiten, welche dem besagten Heim-Gateway zugewiesen ist, über das Sicherheits-Gateway an mindestens eines der Heim-Gateways aufweist.

14. Der Heim-Gateway-Verwaltungsserver nach Anspruch 13, weiterhin umfassend ein Zuweisungsmodul (45) für das dynamische Zuweisen von entsprechenden Basisstationssteuereinheiten (22) an zumindest einige der Heim-Gateways (5).

15. Der Heim-Gateway-Verwaltungsserver nach Anspruch 14, wobei das Zuweisungsmodul (45) dazu ausgelegt ist, mindestens einem Heim-Gateway (5) eine auf der Basis eines Lastverteilungskriteriums zwischen den Basisstationssteuereinheiten des privaten Betreibernetzwerks (20) ausgewählte Basisstationssteuereinheit (22) zuzuweisen.

16. Der Heim-Gateway-Verwaltungsserver nach Anspruch 14, wobei das Zuweisungsmodul (45) dazu ausgelegt ist, einem Heim-Gateway (5a) mit einem definierten Standort eine Basisstationssteuereinheit (22) mit Anschlussfähigkeit an eine andere Basisstationssteuereinheit (2a) des zellularen Netzwerks zuzuweisen, wobei die besagte andere Basisstationssteuereinheit mindestens eine den besagten Standort abdeckende Zelle überwacht.

17. Der Heim-Gateway-Verwaltungsserver nach einem beliebigen der Ansprüche 13 bis 16, weiterhin umfassend Mittel (43) zum Speichern von mindestens einer mit einem entsprechenden der Heim-Gateways (5) assoziierten Zugriffsbestätigungsliste, wobei die Zugriffsbestätigungsliste Mobilstationen, die für die Kommunikation über das besagte eine der Heim-Gateways autorisiert sind, bestimmt.

18. Der Heim-Gateway-Verwaltungsserver nach Anspruch 17, weiterhin umfassend Mittel (42) zum Herunterladen der besagten Zugriffsbestätigungsliste auf die Basisstationssteuereinheit (22), welche dem besagten einen der Heim-Gateways (5) zugewiesen ist, in einer Phase (34) des Anschlusses des besagten einen der Heim-Gateways an die besagte Basisstationssteuereinheit.

## Revendications

1. Réseau d'accès pour un système de communication cellulaire sans fil, comprenant des passerelles domestiques (5) placées dans les locaux du client et un réseau opérateur privé (20),
dans lequel chaque passerelle domestique possède une interface (8) pour communiquer sur un réseau public à large bande (6) et une station de base émettrice/réceptrice (9) pour fournir des liaisons sans fil à au moins une station mobile et réaliser l'interface avec une unité de contrôle de station de base,
dans lequel ledit réseau opérateur privé comprend des unités de contrôle de station de base (22), au moins une passerelle de sécurité (21) et au moins un serveur de gestion de passerelle domestique (26), la passerelle de sécurité possédant une interface sécurisée pour établir des tunnels sécurisés (17) pour communiquer avec des passerelles domestiques par l'intermédiaire du réseau public à large bande,
dans lequel chaque passerelle domestique est agencée pour communiquer avec un serveur de gestion de passerelle domestique du réseau opérateur privé via la passerelle de sécurité afin d'obtenir une adresse d'une des unités de contrôle de station de base attribuée à ladite passerelle domestique,
et dans lequel la station de base émettrice/réceptrice d'une passerelle domestique réalise l'interface avec l'unité de contrôle de station de base attribuée à ladite passerelle domestique via le réseau opérateur privé et un tunnel sécurisé avec la passerelle de sécurité.

2. Réseau d'accès selon la revendication 1, dans lequel le serveur de gestion de passerelle domestique (26) possède un module d'attribution (45) pour attribuer dynamiquement des unités de contrôle de station de base respectives (22) à au moins certaines passerelles domestiques (5).

3. Réseau d'accès selon la revendication 2, dans lequel le module d'attribution (45) est agencé pour attribuer à au moins une passerelle domestique (5) une unité de contrôle de station de base (22) choisie sur la base d'un critère d'équilibrage de charge entre les unités de contrôle de station de base du réseau opérateur privé (20).

4. Réseau d'accès selon la revendication 2, dans lequel le module d'attribution (45) est agencé pour attribuer à une passerelle domestique (5a) ayant un emplacement défini une unité de contrôle de station de base (22) ayant une connectivité avec une autre unité de contrôle de station de base (2a) du réseau cellulaire, ladite autre unité de contrôle de station de base supervisant au moins une cellule couvrant ledit emplacement.

5. Réseau d'accès selon la revendication 4, dans lequel l'unité de contrôle de station de base (22) attribuée à ladite passerelle domestique (5a) ayant un emplacement défini est agencée pour provoquer une communication établie par l'intermédiaire de la station de base émettrice/réceptrice (9) de la passerelle domestique à transférer par une cellule supervisée par ladite autre unité de contrôle de station de base (2a) selon les conditions radio de ladite communication.

6. Réseau d'accès selon l'une quelconque des revendications précédentes, dans lequel la passerelle domestique (5) possède un module de mémoire (15) contenant une adresse d'un serveur de gestion de passerelle domestique (26) pour récupérer des paramètres de configuration ainsi que l'adresse de l'unité de contrôle de station de base attribuée (22).

7. Réseau d'accès selon la revendication 6, dans lequel le module de mémoire (15) contient en outre une adresse d'une passerelle de sécurité (21) du réseau opérateur privé (20).

8. Réseau d'accès selon l'une quelconque des revendications précédentes, dans lequel au moins l'une des passerelles domestiques (5) est associée à une liste d'autorisation d'accès stockée au niveau du serveur de gestion de passerelle domestique (26), la liste d'autorisation d'accès désignant les stations mobiles autorisées à communiquer par l'intermédiaire de ladite une parmi les passerelles domestiques.

9. Réseau d'accès selon la revendication 8, dans lequel la liste d'autorisation d'accès est téléchargée du serveur de gestion de passerelle domestique (26) vers l'unité de contrôle de station de base (22) attribuée à ladite une parmi les passerelles domestiques (5) lors d'une phase (34) de rattachement de ladite une parmi les passerelles domestiques à ladite unité de contrôle de la station de base.

10. Passerelle domestique pour un réseau d'accès d'un système de communication sans fil cellulaire, dans laquelle le réseau d'accès comprend un réseau opérateur privé (20) possédant des unités de contrôle de station de base (22), au moins une passerelle de sécurité (21) et au moins un serveur de gestion de passerelle domestique (26), dans laquelle la passerelle domestique (5) comprend une interface (8) pour communiquer dans un réseau public à large bande (6), une station de base émettrice/réceptrice (9) pour fournir des liaisons sans fil à au moins une station mobile et pour réaliser l'interface avec une unité de contrôle de station de base du réseau opérateur privé, et des moyens (18) pour communiquer via la passerelle de sécurité avec un serveur de gestion de passerelle domestique du réseau opérateur privé afin d'obtenir une adresse d'une des unités de contrôle de station de base attribuée à ladite passerelle domestique de manière à ce que la station de base émettrice/réceptrice réalise l'interface avec l'unité de contrôle de station de base attribuée à ladite passerelle domestique via le réseau opérateur privé et un tunnel sécurisé établi sur le réseau public à large bande entre la passerelle de sécurité et ladite passerelle domestique.

11. Passerelle domestique selon la revendication 10, comprenant en outre un module de mémoire (15) contenant une adresse d'un serveur de gestion de passerelle domestique (26) pour récupérer des paramètres de configuration ainsi que l'adresse de l'unité de contrôle de station de base attribuée (22).

12. Passerelle domestique selon la revendication 11, dans lequel le module de mémoire (15) contient en outre une adresse d'une passerelle de sécurité (21) du réseau opérateur privé (20).

13. Serveur de gestion de passerelle domestique pour un réseau d'accès d'un système de communication sans fil cellulaire, dans lequel le réseau d'accès comprend des passerelles domestiques (5) installées dans les locaux du client et un réseau opérateur privé (20) comprenant ledit serveur de gestion de passerelle domestique (26), des unités de contrôle de station de base (22) et au moins une passerelle de sécurité (21), dans lequel chaque passerelle domestique possède une interface (8) pour communiquer avec une passerelle de sécurité (21) sur un réseau public à large bande (6) et une station de base émettrice/réceptrice (9) pour fournir des liaisons sans fil à au moins une station mobile et pour réaliser l'interface avec une unité de contrôle de station de base, dans laquelle le serveur de gestion de passerelle domestique (26) possède des moyens (41) pour envoyer une adresse respective de l'une des unités de contrôle de station de base attribuée à ladite passerelle domestique à au moins une des passerelles domestiques, via la passerelle de sécurité.

14. Serveur de gestion de passerelle domestique selon la revendication 13, comprenant en outre un module d'attribution (45) pour attribuer dynamiquement des unités de contrôle de station de base respectives (22) à au moins certaines passerelles domestiques (5).

15. Serveur de gestion de passerelle domestique selon la revendication 14, dans lequel le module d'attribution (45) est agencé pour attribuer à au moins une passerelle domestique (5) une unité de contrôle de station de base (22) choisie sur la base d'un critère d'équilibrage de charge entre les unités de contrôle de station de base du réseau opérateur privé (20).

16. Serveur de gestion de passerelle domestique selon la revendication 14, dans lequel le module d'attribution (45) est agencé pour attribuer à une passerelle domestique (5a) ayant un emplacement défini une unité de contrôle de station de base (22) ayant une connectivité avec une autre unité de contrôle de station de base (2a) du réseau cellulaire, ladite autre unité de contrôle de station de base supervisant au moins une cellule couvrant ledit emplacement.

17. Serveur de gestion de passerelle domestique selon l'une des revendications 13 à 16, comprenant en outre des moyens (43) pour stocker au moins une liste d'autorisation d'accès associée à l'une respective des passerelles domestiques (5), la liste d'autorisation d'accès désignant les stations mobiles autorisées à communiquer par l'intermédiaire de ladite une des passerelles domestiques.

18. Serveur de gestion de passerelle domestique selon la revendication 17, comprenant en outre des moyens (42) pour télécharger ladite liste d'autorisation d'accès à l'unité de contrôle de station de base (22) attribuée à ladite une des passerelles domestiques (5) au cours d'une phase (34) de rattachement de ladite une des passerelles domestiques à ladite unité de contrôle de station de base.
